Europäisches Patentamt

European Patent Office

Office européen des brevets

(11) Publication number: **0 272 502**

**A2**

# EUROPEAN PATENT APPLICATION

(21) Application number: **87117699.6**

(51) Int. Cl.⁴: **A23L 1/162**

(22) Date of filing: **30.11.87**

(30) Priority: **19.12.86 US 944551**

(43) Date of publication of application:
**29.06.88 Bulletin 88/26**

(84) Designated Contracting States:
**AT BE CH DE ES FR GB GR IT LI LU NL SE**

(71) Applicant: **SANWA FOODS, INC.**
**331 North Vineland Avenue**
**Industry City California(US)**

(72) Inventor: **Lee, Tung-Ching**
**26 Higgens Drive**
**Kingston Rhode Island(US)**
Inventor: **Liu, Chung-Yung**
**1731 San Gabriel Blvd.**
**San Marino California 91108(US)**
Inventor: **Goh, Hup-Jin Penthouse**
**LiangCourtRegencyApt.**
**177 River Valley Road**
**Singapore 0617(SG)**

(74) Representative: **Baillie, Iain Cameron et al**
**c/o Ladas & Parry Isartorplatz 5**
**D-8000 München 2(DE)**

(54) **Process for the preparation of instant pasta.**

(57) Quick-cooking pasta products may be obtained from a dough formed from flour which is at least 90% by weight semolina or durum wheat flour and 0.5 to 5% emulsifier and 22 to 32 percent water based on the weight of flour by effecting intimate mixing of the dough at 170-190°F. and then extruding it through a co-rotating twin screw extruder at a temperature of 140 to 190°F.

EP 0 272 502 A2

The present invention relates to the production of pasta. In particular, it relates to the production of a quick-cooking pasta that can be prepared for consumption more rapidly than traditional pasta products.

Over the last 15 years or so there have been many attempts to produce quick-cooking pasta products. While these have been successful in producing quick-cooking noodles and similar foods from wheat flour, such attempts have been less successful in producing a commercially-acceptable products when using flour obtained from "heavier" cereals such as semolina and durum wheat from which traditional pasta foods such as spaghetti and macaroni are made.

U.S. Patent 3,138,462 (Katz, et al issued June 23, 1964), describes the production of a precooked pasta by heating a slurry of durum wheat at 140-212°F. (60-100°C.) to gelatinize the starch present and then extruding the product.

U.S. Patent 3,192,049 (Kinsley, issued June 29, 1965) describes a process in which semolina or durum is blended with a proteinaceous material such as soybean flour and then gelatinized by cooking or steam heating at 170-212°F. (77-100°C.) and then extruded and cooked for 4-12 minutes at 205-212°F. (96-100°C.).

U.S. Patent 3,252,805 (Sienklewicz, et al issued May 24, 1966) describes extrusion of a durum wheat flour paste into macaroni shapes, cooking the product and then washing it to remove any free surface starch.

U.S. Patent 3,482,993 (Fluucane, issued December 9, 1969) describes extruding a semolina paste in the shape of macaroni, cooking the product at boiling and then washing with water to remove free starch and drying at a particular rate.

U.S. Patent 3,533,801 (Wenger, issued October 13, 1970) describes the production of a "cup shaped" cereal product by extrusion of a moistened farinaceous product in such a way as to form a central line of weakness in the extrudable and then sticking the extrudable into disks and expanding them.

U.S. Patent 3,843,818 (Wren, issued October 27, 1974) describes the production of a low calorie pasta by working a mixture of polygalactomannan gum, cereal material, vegetable protein and water at 55 to 98°C. and then extruding it.

U.S. Patent 3,846,563 (Cunningham, issued November 5, 1974) describes an attempt to produce quick cooking pasta products by incorporating at least 50% precooked wheat flour in the dough.

U.S. Patent 4,044,165 (Baumann, issued April 23, 1977) describes the production of a precooked pasta by extruding a semolina paste under high pressure at from 90-110°C.

U.S. Patent 4,098,906 (Hisaki, et al issued July 4, 1978) describes "instant" noodles made from wheat flour having from 1-6% salt, the flour being at least 93% converted and the noodles being coated with a mixture of an edible oil and an emulsifier.

U.S. Patent 4,230,735 (Yoshida, et al issued October 28, 1980) describes the production of quick-cooking noodles from a mixture of wheat flour optionally mixed with potato flour and edible fat or oil by mixing and then rolling into a sheet followed by steaming strips of dough cut from the sheet.

U.S. Patent 4,394,397 (Lometillo, et al, issued July 19, 1983) describes the production of a quick-cooking pasta product by extrusion of a blend comprising a major portion of a farinaceous material such as semolina and a minor proportion of gluten, microcrystalline cellulose an edible vegetable oil and water, the blend being worked at high temperature and then extruded under conditions so as to result in expansion after leaving the extruder.

U.S. Patent 4,423,082 (Bauernfeird, et al, issued December 27, 1983) describes the production of quick-cooking pasta using wheat flour optionally mixed with other flours by heating above 235°F. (113°C.) and then cooling to below 200°F. (93°C.) before extruding.

U.S. Patent 4,469,711 (Seltzer, issued September 4, 1984) teaches the production of a quick-cooking pasta by extruding a dough comprising a flour (for example, semolina flour), a carbonate and an acidic leavening salt.

U.S. Patent 4,483,879 (Sugisawa, et al, issued November 20, 1984) describes the production of instant noodles made from wheat flour by dehydrating raw noodles at a particular rate of evaporation of water).

U.S. Patent 4,495,214 (Seltzer, et al, issued January 22, 1985) describes the production of quick-cooking pasta from a carbonate and acidic material-containing dough by extrusion cooking of the dough under conditions to facilitate reaction of the carbonate with the acidic material.

Winter, et al in U.S. Patent 4,539,214, issued September 3, 1985, describe the production of quick-cooking pasta by extruding a semolina and/or wheat dough, cutting the product into length having wall thickness of 0.3 to 0.7 mm and then heating the product in dry super heated steam at 102-140°C. from seven to twenty minutes.

U.S. Patent 4,540,590 (Harada, et al, issued September 10, 1985) describes the production of rapid cooking pastas from a mixture of wheat and semolina flours by extruding this under particular conditions of pressure and the "degree of vacuum" into which it is extruded followed by drying to a specified degree and then packaging the product in heat resistant packages and sterilizing them at from 70-95°C.

U.S. Patent 4,540,592 (Myer, et al, issued September 10, 1985) describes the production of a precooked pasta product by heating a pasta dough to a temperature of 235-350°F. (113-177°C.) in an extruder cooker to effect gelatinization of the dough followed by extrusion by means of a twin-screw extruder that subjects the pasta component to substantial back mixing at elevated temperatures and pressures prior to being cooled to below 212°F. (100°C.) prior release from the extruder.

U.S. Patent 4,590,083 (Hatsugai, et al, issued May 20, 1986) describes the production of rapid cooking noodles from wheat flour by heating and drying the product obtained by forming a dough of wheat flour and an emulsifier into a desired shaped.

## SUMMARY OF THE PRESENT INVENTION

It is an object of the present invention to provide a quick-cooking pasta product from a dough formed substantially of semolina and/or durum flour which when of a thickness of less than 1 mm may be cooked in less than 5 minutes by conventional boiling or in 2 minutes in cooking in a microwave. We have found that by operating in accordance with the process of the present invention, this objective can be obtained by cooking a semolina or durum wheat dough at lower temperatures than the prior art taught to be necessary.

Accordingly, the present invention provides a process for the production of a quick-cooking pasta product which comprises forming a dough from a flour at least 90% of which is semolina or durum wheat flour, 0.5 to 5% by weight based on the weight of flour of an edible emulsifier and 22 to 32% by weight based on the weight of flour of water, said water content including both added water and any water present in the flour subjecting said dough to intimate mixing at a temperature of 170 to 190°F. (77-88°C.) and thereafter extruding the dough through an intermeshing co-rotating twin-screw extruder at a temperature in the range 140-190°F. (60-88°C.).

Without wishing to be bound by any particular theory, we believe that the reason why we are able to produce satisfactory products at temperatures lower than those indicated to be necessary by the prior art is because the level of gluten present in semolina and durum wheat flour enables one to form a gluten and starch matrix in the product without having to heat the product to the high temperatures above 235°F. (113°C.) indicated in patents such as Bauernfierd and Myer as being necessary for the complete gelatinization of starch.

## DETAILED DESCRPTION OF THE INVENTION

The flour employed in the process of the present invention contains at least 90% semolina or durum wheat flour. Preferably, at least 95% and frequently 100% of the flour is semolina or durum wheat. Frequently, the flour employed contains from 50-100% semolina flour. Other flours that may be present in amounts of up to 10% based on the semolina or durum wheat are wheat, corn, farina, tapioca and potato flours. Typically, the flours employed are of a particle size less than 40 mesh, preferably less than 100 mesh.

The edible emulsifier is present in an amount of 0.1-5% preferably 0.5 to 2% typically about 1% by weight based on the weight of flour. Suitable edible emulsifiers include glyceryl and sorbitan stearates, mono and diglycerides, lecithin and polysorbates. Glyceryl monostearate is particularly preferred. Water is added to result in amounts of 22 to 32%, preferably 25 to 27% water based on the weight of flour. Typically, the water is added to a mixture of the dry ingredients at a temperature of 170°F. to 190°F. (77-88°C.), normally about 175°F. (79°C.). If desired, other ingredients commonly used in pasta products such as eggs, powdered eggs or egg yolks, flavoring agents or coloring agents may be added to the blend.

The mixture of ingredients is intimately mixed at a temperature of from 170°F to 190°F. (77-88°C.). Such mixing may be carried out in any convenient fashion. For example, a screw or paddle blender is particularly useful for this purpose, but other mixers that are capable of producing thorough intimate mixing, such as paddle mixers or even slurry spray mixers may be used if desired. It is, however, often useful for the mixing apparatus to act as a pre-conditioner for the extruder by placing the mixer above the inlet to the extruder and in this case a horizontally-mounted screw mixer is preferred. Typically, the dough will have a residence time in the mixer of from 60 to 150 seconds. We have found that when using a screw mixer mounted as a pre-conditioner to the extruder, it is useful for the screw to be operated at from 100 to 200 rpm, preferably 125 to 175 rpm generating a pressure at the outlet of the mixer of from 300 to 500 psig (2175-3555 kPa). The dough will typically be passed from such a pre-conditioner to the extruder at a temperature of 160 to 185°F. (71-85°C.), preferably about 170°F. (77°C.). Typically, the dry components and the water may be added individually to the mixer, for example, by injecting water at a preconditioner. Alternatively, a preliminary mixing of these components will be carried out, for example, using a planetary mixer before the main mixing stage. If necessary, moisture may be added in the main mixing stage either as water or steam.

The final stage in the process of the present invention is extrusion at moderate temperatures and pressures in an intermeshing co-rotating twin-screw extruder. We have found the Wenger TX Twin Screw Food Extruder supplied by Wenger Manufacturing of Sabetha Kansas to be particularly suitable for use in the process of the invention.

Typically, twin-screw extruders of the type suitable for use in the present invention comprises two portions separated by a vent. The first portion acts as a cooking zone and the second as a forming zone. Temperatures in the cooking zone are normally similar to or above those at which the dough is passed out of the preconditioner or other apparatus used to effect intimate mixing. Commonly, they are in the range 150-190°F. (66-88°C.). The temperature will, of course, vary along the extruder. For example, in a seven head extruder in which there are five heads prior to the vent from a cooking zone and two heads downstream of the vent which constitute a forming zone. In the heads constituting the cooking zone, the temperature may vary from head to head. For example, the first head adjacent the inlet may be at a temperature of as low as 100°F. (38°C.). Typically, however, the temperature in the zone adjacent the vent are higher than this, for example, the temperature in the hottest head, normally that immediately preceding the vent may be in the range 180-190°F. (82-88°C.), normally at least half of the heads in the cooking zone will be at temperatures above 150°F. (65°C.). Temperatures in the range 155-175°F. (68-79°C.) for zones other than that adjacent the vent are often useful. If desired, small amounts of moisture may be introduced into the cooking zone as steam.

Temperatures in the forming zone are normally below those in the hottest part of the cooking zone, for example, in the range 155-175°F. (68-79°C.). If desired, a degree of vacuum may be applied to the vent to help draw off excess moisture. For example, vacuums of 2.5 to 5 psi (17-35 kPa) may be applied. Alternatively, the extruder can vent direct to the atmosphere if desired. Temperature control in the various sections of the extruder is effected by introduction of steam or hot water as required to a heating jacket surrounding the extruder barrel. It will, of course, be appreciated that the mechanical work of the extruder itself contributes substantial amounts of heat in addition to heat added from the jacket.

Typical extruder screws for use have a pitch of from 1.7 to 2.1 cm and are commonly about 1.9 cm. Desirably, the twin screws of extruders for use in the present invention are fully intermeshing and are lengthwise open and crosswise closed. They co-rotate at the same angular velocity. Typically, the screws rotate at from 100 to 200 rpm, preferably about 150 rpm.

Pressures generated in the forming region of the extruder are typically no more than 600 psig (4250 kPa), although higher and lower pressures, for example, in the range 500-750 psig (3550-5280 kPa) may be generated in particular circumstances.

Normally pasta will have a residence time in the cooking stage of the extruder of 10 to 20 seconds, preferably about 15 seconds and from 35-55 seconds, preferably about 45 seconds in the forming stage.

As noted above, Wenger TX twin-screw extruders are particularly useful for carrying out the process of the present invention. Such extruders have conical final screw elements at the discharge end of each co-rotating screw element. While such conical screw elements are not essential for satisfactory operation of the process of the present invention, the provision of such elements does assist in ensuring smooth flow through the extrusion die and can reduce barrel and screw wear that may otherwise be encountered.

We have found that in order to ensure that the pasta products obtained are capable of being cooked to produce a palatable product in less than 5 minutes, it is desirable that the die aperture of the extruder imparts a thickness of less than 1 mm preferably in the range 0.75 to 1 mm to the pasta product being extruded, for example, by forced air drying. Following the extrusion, the pasta products are dried. This will typically be carried out at a temperature in the range 130-180°F. (54-82°C.) for from 45 minutes to two hours, for example, at 150°F. (65°C.) for 90 minutes. Typically, after drying the products have a moisture content of 7 to 12%.

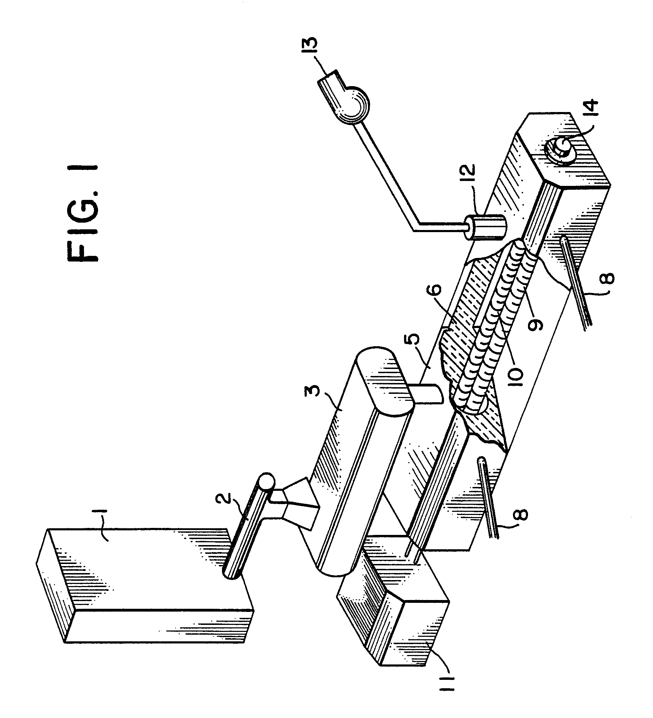

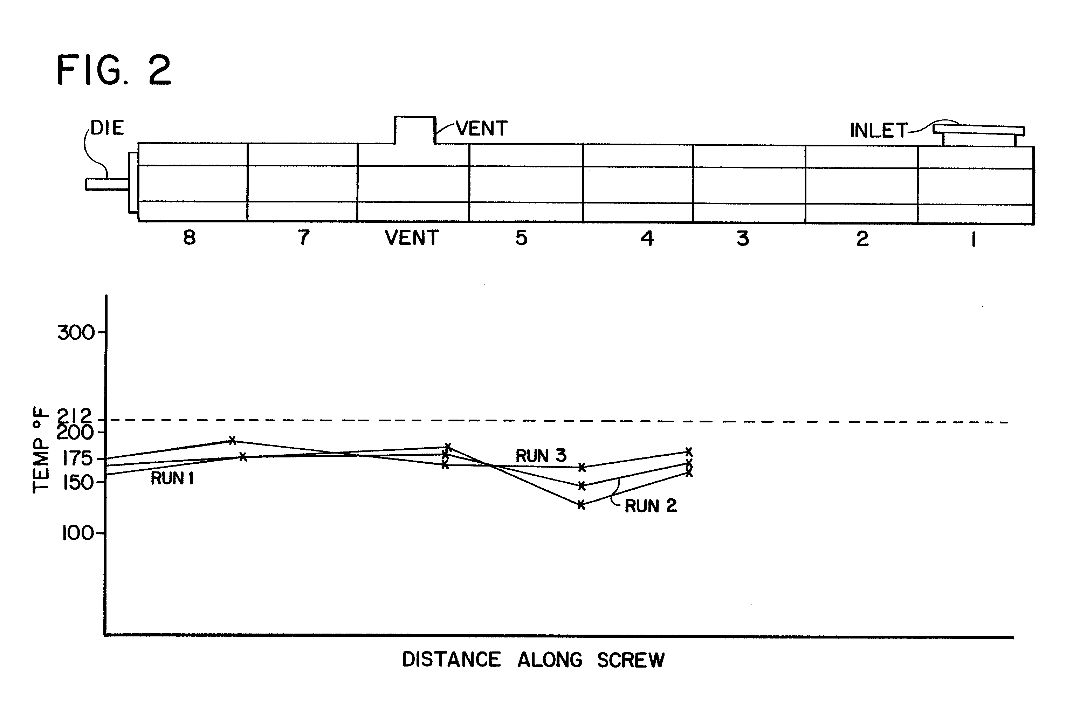

An extruder and preconditioner unit suitable for carrying out the present invention will now be described with reference to the accompanying drawing of which Figure 1 shows a partially cut away perspective view of an apparatus suitable for use in this invention, and Figure 2 shows a plot of temperatures measured at various points along the extruder in the production runs described in the Examples.

Turning to Figure 1, the apparatus comprises a bin 1 into which the dry components and water are introduced. The components are passed by a screw feed 2 into a preconditioner 3 comprising a double non-intermeshing mixing screw. The pre-conditioner is surrounded by a heating jacket 4. Beneath the preconditioner there is mounted a twin-screw extruder 5 into which dough from the preconditioner may be passed. The extruder is surrounded by a heating jacket 6 divided into seven sections each of which may be heated separately by means of hot water or steam feeds 8. The screws 9, 10 are intermeshing and driven by drive means 11. Between the fifth and sixth heating sections is mounted a vent head 12 which is attached to a vacuum pump 13. At the end of the extruder furthest from the inlet is mounted an extruder die 14.

The process of the invention will be illustrated by the following Examples:

A cereal blend comprising of fancy durum wheat semolina (99% weight and concentrated glyceryl monostearate (Myvaplex 600 obtained from Eastman Kodak Co. 1% by weight) was filed into the live bin unit of a Wenger TX-80 twin screw extruder system with a preconditioning system manufacturing by Wenger Manufacturing, Sebetha, Kansas, as schematically illustrated in Figure 1, water or steam was introduced to the cereal blend in the preconditioner. Temperature readings were monitored through thermocouples at various positions along the barrel zones on the extruder. The conditions used in each of three runs are set out in the following Table:

|  | Run 1 | Run 2 | Run 3 |
|---|---|---|---|
| Extruder Speed (RPM) | 150 | 150 | 152 |
| Temp 1st Head | No external heating | | |
| Temp 2nd Head | No external heating | | |
| Temp 3rd Head | 168°F. (76°C.) | 175°F. (79°C.) | 184°F. (84°C.) |
| Temp 4th Head | 147°F. (64°C.) | 154°F. (68°C.) | 180°F. (82°C.) |
| Temp 5th Head | 189°F. (87°C.) | 185°F. (85°C.) | 180°F. (82°C.) |
| Temp 6th Vent | Vent | | |
| Temp 7th Head | 173°F. (78°C.) | 173°F. (78°C.) | 184°F. (84°C.) |
| Temp 8th Head | 153°F. (67°C.) | 160°F. (71°C.) | 172°F. (78°C.) |
| Steam to Mixing Cylinder | 1.0 | 1.0 | 1.2 |
| Steam to Extruder | 1.2 | 1.2 | 1.2 |
| Water to Mixing Cylinder | .71 lbs/min (.32 kg/min) | .71 lbs/min (.32 kg/min) | .83 lbs/min (.37 kg/min) |
| Water to Extruder | 1.03 lbs/min (.47 kg/min) | 1.38 lbs/min (.63 kg/min) | .77 lbs/min (.35 kg/min) |
| Extruder Load | 25% | 25% | 25% |
| Mixing Cylinder RPM | 140 | 140 | 170 |
| Pressure PSI (7th Head) | 200 | 200 | 170 |
| Pressure PSI (8th Head) | 500 | 500 | 500 |
| Moisture, Extruder Product | 28% | 31% | 28% |
| Moisture, Dried Product | 8.0% | 8.2% | 11.0% |
| Extruder Stability | Good | Good | Good |
| Product Stability | Good | Good | Good |

The dough was extruder from the extruder through a cooking zone and finally through a macaroni die and give a nominal product with a wall thickness of 1 mm. After the dough was released through the die, the dough was cut by a rotating flexible knife held against the head plate face the die. The macaroni shapes the fell onto a conveyor belt and were carried into a continuous hot forced air dryer with a drying temperature of 150°F. (66°C.) for 90 minutes. The moisture content of the product entering the dryer was 27.0% to 31.0%. The moisture content of the dried macaroni was 8 to 11.0%. The preparation time for all of the products was less than 5 minutes with adding boiling water or 2 minutes with cold water using microwave heating. After rehydration, the cooked macaroni tasted and looked similar to traditional pasta product.

## Claims

1. A process for the production of a quick-cooking pasta product which comprises forming a dough from a flour at least 90% by weight of which is semolina or durum wheat flour, 0.5 to 5% by weight based on the weight of flour of edible emulsifier and water in an amount to constitute 22 to 32 percent by weight based on the weight of flour, said water content including both added water and any water present in the flour, subjecting said dough to intimate mixing at a temperature of 150 to 190°F. (65-88°C.) preferably 170-180°F. (77-82°C.) and thereafter extruding the dough through an intermeshing co-rotating twin screw extruder at a temperature above 140°F. (60°C.) and below 190°F. (88°C.).

2. A process according to claim 1, wherein said dough is subjected to two stages of treatment in said extruder first in a cooking region wherein the highest temperature is above 175°F. (79°C.) but below 190°F. (88°C.) and second in a forming region wherein the temperature is in the range 155-175°F. (68-79°C.).

3. A process according to claim 2, wherein said extruder is vented between the cooking region and the forming region.

4. A process according to claim 3, wherein the pressure at the part of release of the dough from the extruder is in the range 500-750 psig (3550-5280 kPa) preferably between 600 psig (4250 kPa).

5. A process according to claim 1, wherein said flour comprises at least 95% by weight durum wheat flour or semolina flour, and preferably consists essentially of durum wheat flour, semolina flour or a mixture thereof.

6. A process according to any one of the preceding claims, wherein said flour comprises 50-100% semolina flour.

7. A process according to any one of the preceding claims, wherein said edible emulsifier is selected from glyceryl and sorbitan stearates, mono and diglycerides, and polysorbates and is preferably glyceryl stearate.

8. A process according to any one of the preceding claims, wherein said edible emulsifier is present in an amount from 0.5 to 2% by weight based on the weight of flour.

9. A process according to any one of the preceding claims, wherein said dough comprises 23-29 percent, preferably 25 to 27 percent based on said flour of water.

10. A process according to any one of the preceding claims, wherein said intimate mixing is effected at a temperature of 170 to 180°F. (77-82°C.).

11. A process according to any one of the preceding claims, wherein said extrusion is carried out in such manner as to extrude a pasta product having a thickness of from 0.75 to 1 mm.

12. A process according to claim 2 or any one of claims 3-11, when directly or indirectly dependent on claim 2, wherein the maximum temperature in said cooking region is no greater than 185°F.

13. A process according to claim 2 or any one of claims 3-12, when directly or indirectly dependent on claim 2, wherein the temperature in said forming region is less than the maximum temperature in said cooking region.

14. A process according to claim 13, wherein the final screw element in each of said co-rotating screws is a conical screw element.

15. A process according to any one of the preceding claims, wherein the extruded product is dried at a temperature of 130-180°F. (54-82°C.) for 45 minutes to two hours, preferably by forced air drying.

0 272 502

# FIG. I

# FIG. 2

DIE ⎵      VENT      INLET

| 8 | 7 | VENT | 5 | 4 | 3 | 2 | I |

DISTANCE ALONG SCREW

0 272 502